# EUROPÄISCHE PATENTANMELDUNG

(11) **EP 4 707 641 A1**
(43) Veröffentlichungstag der Anmeldung: **11.03.2026**
(21) Anmeldenummer: 24198625.6
(22) Anmeldetag: 05.09.2024
(51) Int. Cl.: F16H 57/08, F03D 15/10, F16C 17/04, F16C 23/02

(54) **PLANETENGETRIEBE MIT AXIAL GLEITGELAGERTEN PLANETENRÄDERN**

(71) Anmelder: Flender GmbH, 46395 Bocholt (DE)
(72) Erfinder: BUCHHORN, Dr. Nico, 46395 Bocholt (DE); BÖING, Alfons, 46395 Bocholt (DE); MEYER, Dr. Thomas, 46395 Bocholt (DE)
(74) Vertreter: Michalski Hüttermann & Partner Patentanwälte mbB

(57) **Zusammenfassung**

Planetengetriebe 10 für eine über einen Rotor 72 angetriebene Windkraftanlage 70, mit zumindest einer um eine Drehachse A_{D} umlaufenden Planetenstufe 14, wobei die Planetenstufe 14 ein Sonnenrad 22, einen Planetenträger 16 und ein Hohlrad 20 aufweist und der Planetenträger 16 mehrere zwischen Seitenwangen 24, 26 des Planetenträgers 16 umlaufende und radial gleitgelagerte und wechselseitig mit dem Hohlrad 20 und dem Sonnenrad 22 in einem Verzahnungseingriff stehende Planetenrädern 18 aufnimmt und wobei in jede Seitenwange 24, 26 zumindest ein Axialgleitelement 30 eingesetzt ist und ein Kragenabschnitt 32 eines jeden Axialgleitelements 30 in axialer Richtung über die Seitenwange 24, 26 hervorsteht und stirnseitig eine Gleitfläche 34 zur axialen Lagerung des Planetenrades 18 trägt. Der Kragenabschnitt 32 liegt rückseitig an der jeweiligen Seitenwange 24, 26 unmittelbar an.

## Beschreibung

Die Erfindung betrifft ein Planetengetriebe für eine über einen Rotor angetriebene Windkraftanlage, mit einer um eine Drehachse A_{D} umlaufenden Planetenstufe, wobei die zumindest eine Planetenstufe ein Sonnenrad, einen Planetenträger und ein Hohlrad aufweist und der Planetenträger mehrere zwischen Seitenwangen des Planetenträgers umlaufende und radial gleitgelagerte und wechselseitig mit dem Hohlrad und dem Sonnenrad in einem Verzahnungseingriff stehende Planetenrädern aufnimmt und wobei in jede Seitenwange zumindest ein Axialgleitelement eingesetzt ist und ein Kragenabschnitt eines jeden Axialgleitelements in axialer Richtung über die Seitenwange hervorsteht und stirnseitig eine Gleitfläche zur axialen Lagerung des Planetenrades trägt.

Getriebe, insbesondere Planetengetriebe, für Windkraftanlagen können mit Gleitlagerungen ausgeführt sein. Dies betrifft bei Planetengetrieben in Regel die radiale Lagerung der Planetenräder auf dem entsprechenden Planetenträger. Sowohl während der Montage als auch während eines Betriebs des Planetengetriebes treten zudem Axialkräfte auf bzw. die Planetenräder können sich in einem gewissen Maß axial verlagern. Da eine solche Gleitlagerung der Planetenräder keine Axialkräfte aufnehmen kann, ist immer auch eine axiale Lagerung der Planetenräder gegenüber den Seitenwangen des Planetenträgers erforderlich, zwischen denen die Planetenräder aufgenommen sind. Die axiale Führung bzw. Abstützung der Planetenräder gegenüber den Seitenwangen erfolgt in der Regel über Anlaufscheiben, die bspw. aus Bronze gefertigt sind. Die Seitenwangen erhalten über diese Anlaufscheiben eine Gleitfläche, auf der die entsprechende Gegenfläche des Planetenrades abgleiten kann und über die die auftretenden Axialkräfte abgestützt werden können. Die Anlaufscheiben werden zwar lose in den Planetenträger eingelegt, müssen aber dennoch gegen Verdrehen gegenüber dem Planetenträger gesichert werden, beispielsweise über eine umfängliche Schlüsselfläche. Eine derartige Axiallagerung der Planetenräder beschreibt die EP 2 383 480 A1 und die DE 10 2016 219 008 A1. Eine andere Möglichkeit zeigt die EP 3 612 743 B1, bei der Kippelemente vorgesehen sind, die von innen in die Seitenwangen eingesetzt sind und die gegenüber den Seitenwangen über Federelemente abgestützt sind.

Nachteilig bei dieser Lösung, die Seitenwangen des Planetenträgers mit verdrehgesicherten Anlaufscheiben zu versehen, ist die hohe Komplexität hinsichtlich der Fertigung, so dass diese zu hohen Bearbeitungskosten des Planetenträgers führt. Die in die Seitenwangen eingesetzten Kippelemente erscheinen aus montagetechnischer Sicht nachteilig. Es besteht ein ständiges Bedürfnis eine konstruktiv und fertigungstechnisch einfachere Lösung zu finden, mit der die auftretenden Axialkräfte aufgenommen werden können.

Es ist die Aufgabe der Erfindung Maßnahmen aufzuzeigen, die über eine konstruktiv und fertigungstechnisch einfachere Lösung die Aufnahme der auftretenden Axialkräfte ermöglichen.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage, mit zumindest einer um eine Drehachse A_{D} umlaufenden Planetenstufe, wobei die Planetenstufe ein Sonnenrad, einen Planetenträger und ein Hohlrad aufweist und der Planetenträger mehrere zwischen Seitenwangen des Planetenträgers umlaufende und radial gleitgelagerte und wechselseitig mit dem Hohlrad und dem Sonnenrad in einem Verzahnungseingriff stehende Planetenrädern aufnimmt und wobei in jede Seitenwange zumindest ein Axialgleitelement eingesetzt ist und ein Kragenabschnitt eines jeden Axialgleitelements in axialer Richtung über die Seitenwange hervorsteht und stirnseitig eine Gleitfläche zur axialen Lagerung des Planetenrades trägt. Der Kragenabschnitt liegt rückseitig an der jeweiligen Seitenwange zur unmittelbaren axialen Abstützung des Axialgleitelements gegenüber dem Planetenträger an.

Das Planetengetriebe kann eine oder mehrere Planetenstufen umfassen. Die jeweils letzte Planetenstufe kann mittelbar oder unmittelbar einen Generator antreiben. Bei einem mittelbaren Antrieb kann eine zwischengeschaltete Stirnradstufe vorgesehen sein. Der Planetenträger kann korbartig aufgeführt sein, wobei der Planetenträger über geeigneten Lagerungen drehbar gegenüber einem Gehäuse bzw. einem Gehäuseteil drehbar um die Drehachse A_{D} gelagert ist. Für diese Lagerung kann eine Wälzlageranordnung vorgesehen sein. Die Drehachse A_{D} legt vorliegend die Axialrichtung fest, so dass sich aus dieser Axialrichtung die jeweiligen Radialrichtungen ergeben.

Die Planetenräder sind über Planetenachsen an dem Planetenträger gehalten. Die Planetenachsen laufen parallel und versetzt zu der Drehachse A_{D}. Die Planetenräder werden zu beiden axialen Seiten jeweils von einer Seitenwange des Planetenträgers eingefasst. Die Planetenräder sind in einer radialen Richtung nach innen und einer radiale Richtung nach außen von dem Planetenträger bzw. den Seitenwangen freigestellt und stehen in jeweiligem Verzahnungseingriff mit einem Hohlrad und einem Sonnenrad bzw. einer Sonnenradwelle.

Die Gleitflächen sind strukturell betrachtet den Seitenwangen zugeordnet. Die Seitenwangen weisen eine Innenfläche auf, über die die Gleitflächen in axialer Richtung, also in Richtung des jeweiligen Planetenrades, hervorstehen. Die jeweilige Innenfläche der Seitenwangen verläuft zweckmäßigerweise in einer Axialebene. Die Gleitflächen sind axial erhaben gegenüber der Innenfläche der Seitenwangen, so dass in einem Betrieb die Planetenräder die Gleitflächen berühren und nicht die Innenflächen. Die Gleitflächen sind in geeigneter Weise lösbar von den Seitenwangen ausgeführt.

Die herkömmlich verwendeten Anlaufscheiben werden durch mindestens ein Axialgleitelement je Seitenwange substituiert. Hierdurch entfallen sowohl die Kosten für die Anlaufscheiben als auch die anteiligen Kosten für die Bearbeitung der Innenflächen Seitenwangen. Auf die Herstellung aufwendiger Spiegelflächen, auf eine Verdrehsicherung der Anlaufscheiben und deren Positionierung kann verzichtet werden. Der Materialbedarf von hochpreisigem Bronzematerial reduziert sich. Durch die Verwendung eines einheitlichen Designs können die Axialgleitelement für unterschiedliche Planetenstufen, im Idealfall für alle Getriebe, verwendet werden, so dass sich weitere Kosteneinsparungen ergeben.

In einer bevorzugten Ausgestaltung des Planetengetriebes weist jede Seitenwange zumindest eine Durchgangsbohrung auf und die Axialgleitelemente sind in die jeweilige Durchgangsbohrung eingesetzt. Die Durchgangsbohrungen sind insbesondere für ein Verfahren zur Montage von Planetenrädern in einem Planetenträger, der mit Axialgleitelementen bestückt ist, vorteilhaft. Über die Durchgangsbohrungen ist es möglich von außen ein Halteelement als Werkzeug einzuführen, über das das jeweilige Axialgleitelement gegenüber der Seitenwange in einer festen Position gehalten wird, so dass der Planetenträger im Montageprozess, falls erforderlich, bewegt werden kann, ohne dass bei noch nicht eingesetztem Planetenrad sich das Axialgleitelement aus seiner Montageposition löst. In vorteilhafter Weise bildet das Axialgleitelement in der zu der Gleitfläche axial entgegengesetzten Stirnfläche eine Gewindebohrung aus, um über die Gewindebohrung das Halteelement lösbar aufzunehmen.

In einer bevorzugten Ausgestaltung des Axialgleitelements weist dieses neben dem Kragenabschnitt einen Schaftabschnitt auf, wobei der Schaftabschnitt des Axialgleitelements einen Durchmesser aufweist, der einem Durchmesser der Durchgangsbohrung entspricht. Konkret kann hierbei vorgesehen sein, dass der Kragenabschnitt einen zweiten, größeren Durchmesser als der Schaftabschnitt aufweist.

In einer bevorzugten Ausgestaltung des Axialgleitelements ist zumindest die Gleitfläche aus einem Bronzematerial oder einem Polymerverbundwerkstoff gebildet. Hierbei ist ein geeignetes Trägermaterial vorgesehen, auf das die Gleitfläche aufgebracht ist. In einer Weiterbildung kann allerdings auch vorgesehen sein, dass das Axialgleitelement weitestgehend oder sogar vollständig aus einem Bronzematerial oder einem Polymerverbundwerkstoff gebildet ist.

In einer bevorzugten Ausgestaltung des Planetengetriebes kann vorgesehen sein, dass je Seitenwange eine der Anzahl der von dem Planetenträger aufgenommenen Planetenrädern entsprechende Anzahl an Axialgleitelementen vorgesehen ist.

Die Aufgabe wird auch gelöst durch einen Antriebsstrang für eine Windkraftanlage zur drehmomentübertragenden Verbindung eines Rotors mit einem Generator, umfassend eine Hauptlagereinheit und einer Hauptwelle und ein über die Hauptwelle angetriebenes Getriebe, wobei das Getriebe als Planetengetriebe wie beschrieben ausgebildet ist.

Die Aufgabe wird ferner gelöst durch eine Windkraftanlage, mit einem Rotorflansch mit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Die Aufgabe wird zudem gelöst durch ein Verfahren zur Montage von Planetenrädern in einem Planetenträger, bei dem nach Bereitstellen eines vertikal gestellten Planetenträgers zumindest ein Axialgleitelement in jeweils eine jede Seitenwange des Planetenträgers durchtretende Durchgangsbohrung eingesetzt wird, ein Halteelement in die Durchgangsbohrung der vertikal oberen Seitenwange eingesetzt und mit dem Axialgleitelement verbunden wird, um das Axialgleitelement in der Durchgangsbohrung zu halten und zumindest ein Planetenrad zwischen die Axialgleitelemente in den Seitenwangen eingeführt und eine Planetenachse in die Seitenwangen und das Planetenrad gesteckt wird und das Halteelement von dem Axialgleitelement und aus der Durchgangsbohrung entfernt wird.

Bei einer bevorzugten Ausgestaltung des Verfahrens wird das Halteelement als Gewindestift ausgeführt mit dem Axialgleitelement verschraubt, um das Axialgleitelement in der Durchgangsbohrung zu halten.

Bei einer bevorzugten Ausgestaltung des Verfahrens wird in die vertikal oberen Seitenwange das Axialgleitelement von vertikal unten und das Haltelement von vertikal oben eingesetzt.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische und ausschnittsweisen Darstellung eines Getriebes,
Fig. 2: eine Detaillierung des Getriebes nach Figur 1 im Bereich des Planetenträgers,
Fig. 3: ein Axialgleitelement als Einzelheit in einer Schnittdarstellung,
Fig. 4a) bis 4d): einen Verfahrensablauf zur Montage von Planetenrädern in einem Planetenträger und
Fig. 5: eine perspektivische Darstellung einer Windkraftanlage.

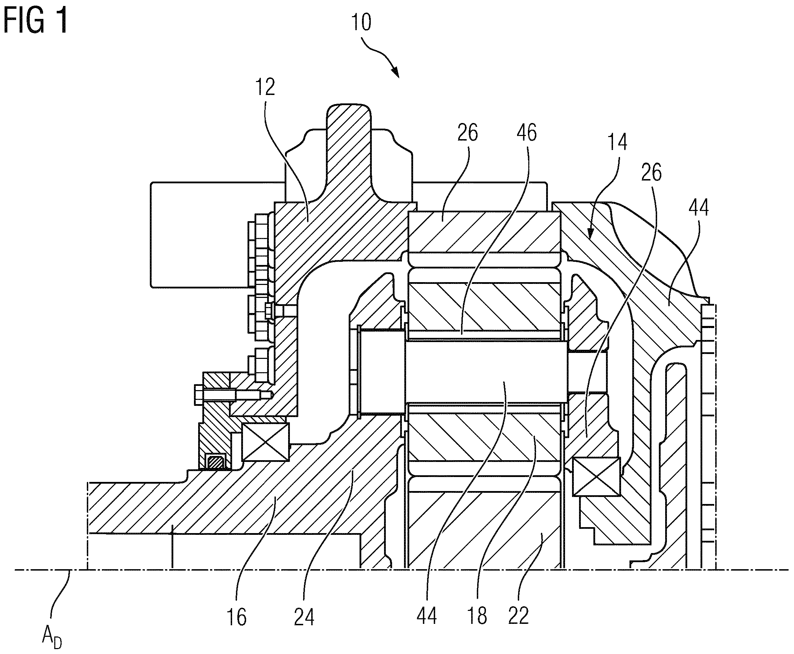

Die Figur 1 zeigt in einer schematischen und ausschnittsweisen Darstellung ein Getriebe 10. Das Getriebe 10 ist als Planetengetriebe ausgeführt, von dem lediglich eine erste Planetenstufe 14 dargestellt ist. Es können mehrere Planetenstufen 14 vorgesehen sein. Das Getriebe 10 kann Teil einer im weiteren Verlauf noch beschriebenen Windkraftanlage sein und zur Übertragung eines Antriebsmoments einen Rotor mit einem Generator verbinden.

Das Getriebe 10 umfasst ein Getriebegehäuse 12, das mehrteilig ausgeführt sein kann und in dem ein Planetenträger 16 der Planetenstufe 14 um eine Drehachse A_{D} umläuft. Der Planetenträger 16 hält mehrere um jeweilige Planetenachsen 44 drehbar gelagerte Planetenräder 18, wobei die Planetenräder 18 wechselseitig mit einem in dem Getriebegehäuse 12 gehaltenen Hohlrad 20 und einem in dem Getriebegehäuse 12 drehbar gehaltenen Sonnenrad 22 in einem Verzahnungseingriff stehen. Die Planetenräder 18 sind über Gleitlager 46 gegenüber der Planetenachse 28 gelagert. Es kann vorgesehen sein, dass ein Rotor 72 einer Windkraftanlage 70 zumindest mittelbar den Planetenträger 16 rotatorisch antreibt, vgl. hierzu Figur 6. Eine weitere Beschreibung des strukturellen Aufbaus des Getriebes 10 ist an dieser Stelle nicht erforderlich.

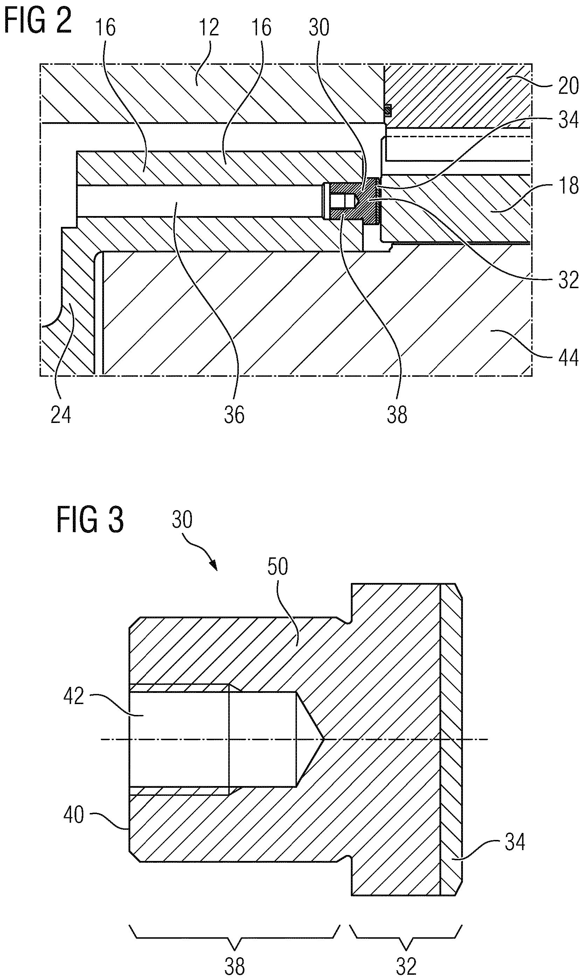

Die Figur 2 zeigt eine Detaillierung des Getriebes 10 im Bereich des Planetenträgers 16 und eines auf einer Planetenachse 44 drehbar gehaltenen Planetenrades 18 und das mit diesem radial außen kämmende Hohlrad 20. Der Planetenträger 16 bildet zwei sich in radialer Richtung erstreckende und in einem axialen Abstand zueinander stehende Seitenwangen 24, 26 aus, von denen in der Figur 2 lediglich eine Seitenwange 24 dargestellt ist. Axial zwischen den beiden Seitenwangen 24, 26 befindet sich ein Zwischenraum 48, in dem die Planetenräder 18 aufgenommen sind. Die Planetenräder 18, von denen die Figur 2 exemplarisch lediglich eins zeigt, sitzen somit in axialer Richtung betrachtet zwischen den Seitenwangen 24, 26 ein. Infolge von auf die Planetenräder 18 wirkenden Axialkräften haben die Planetenräder 18 je nach Drehrichtung ein Bestreben in Richtung einer der Seitenwangen 24, 26 zu laufen.

Um die Planetenräder 18 folglich in ihrer axial vorgesehenen Position zu halten, sitzt in jeder Seitenwange 24, 26 zumindest ein Axialgleitelement 30 ein. Das Axialgleitelement 30 bildet einen Kragenabschnitt 32 aus, der in axialer Richtung über die Seitenwange 24, 26 hervorsteht und in den Zwischenraum 48 ragt, wodurch sichergestellt wird, dass Seitenflanken des Planetenrades 18 von der jeweiligen Seitenwange 24, 26 in einer Montage- und einer Betriebssituation freigestellt sind. Der Kragenabschnitt 32 des Axialgleitelements 30 trägt stirnseitig eine Gleitfläche 34 zur axialen Lagerung des Planetenrades 18. Der Kragenabschnitt 32 liegt rückseitig an der jeweiligen Seitenwange 24, 26 zur unmittelbaren axialen Abstützung des Axialgleitelements 30 gegenüber dem Planetenträger 16 an.

Zumindest eine der Seitenwangen 24, 26 weist eine Durchgangsbohrung 36 auf, in die jeweils ein Axialgleitelement 30 eingesetzt ist. Die Axialgleitelemente 30 weisen neben dem Kragenabschnitt 32 einen Schaftabschnitt 38 auf und das Axialgleitelement 30 sitzt über den Schaftabschnitt 38 in der Durchgangsbohrung 36 ein und wird hierüber gegenüber der jeweiligen Seitenwange 24, 26 positioniert. Ein Durchmesser des Schaftabschnitts 38 entspricht in seiner Größenordnung einem Durchmesser der Durchgangsbohrung 36, so dass der Schaftabschnitt 38 beispielsweise mit einer Spielpassung in der Durchgangsbohrung 36 einsitzt. Der Kragenabschnitt 32 weist einen zweiten, größeren Durchmesser als der Schaftabschnitt 38 auf.

Zumindest die Gleitfläche 34 ist aus einem Bronzematerial oder einem Polymerverbundwerkstoff gebildet. Alternativ kann auch vorgesehen sein, dass das Axialgleitelement 30 aus einem Bronzematerial oder einem Polymerverbundwerkstoff gebildet ist.

Die Figur 3 zeigt ein Axialgleitelement 30 als Einzelheit in einer Schnittdarstellung. Gezeigt ist die Varianten, bei der ein Grundkörper 50 des Axialgleitelements 30 aus einem Trägermaterial gefertigt ist und auf den Grundkörper 50 die Gleitfläche 34, beispielsweise bestehend aus einem Bronzematerial oder einem Polymerverbundwerkstoff, aufgebracht ist. Zudem bildet das Axialgleitelement 30 in der zu der Gleitfläche 34 axial entgegengesetzten Stirnfläche 40 beispielsweise eine Gewindebohrung 42 aus. In der Gewindebohrung 42 kann dann zu Montagezwecken des Planetenträger 16 ein Haltelement lösbar befestigt werden, wie nachfolgend noch beschrieben wird.

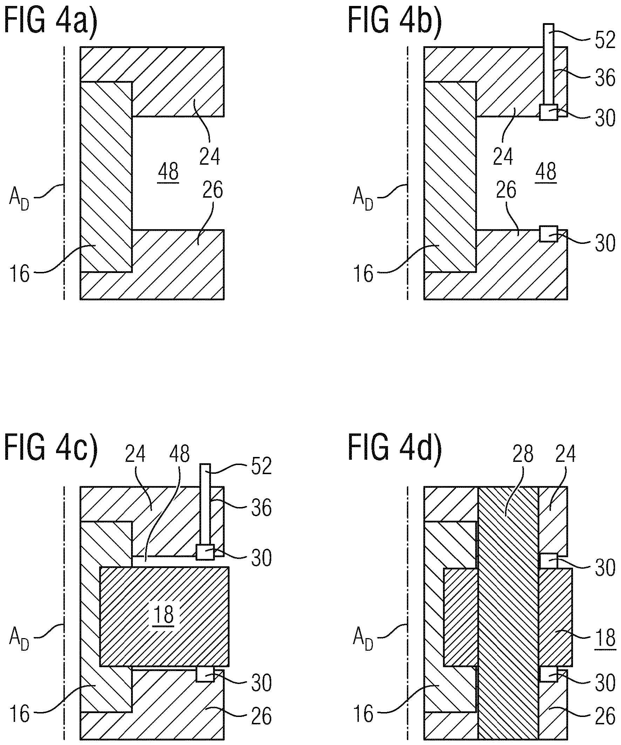

Die Figuren 4a) bis 4d) zeigen einen Verfahrensablauf zur Montage von Planetenrädern 18 in einem Planetenträger 16 und zwar bei zusätzlicher Positionierung von Axialgleitelementen 30 in den Seitenwangen 24, 26 des Planetenträgers 16. In einem ersten, schematisch in Figur 4a) dargestellten Verfahrensschritt wird ein Planetenträger 16 bereitgestellt und hinsichtlich der Drehachse A_{D} vertikal gestellt. Hierdurch ergibt sich, dass eine der Seitenwangen 24, 26 vertikal oben und die andere der Seitenwangen 26, 24 vertikal unten liegt. Der Zwischenraum 48 ist somit von einer Seite her zugänglich. In der Figur 4b) ist ein Verfahrensschritt gezeigt, bei dem in die Seitenwangen 24, 26 jeweils ein Axialgleitelement 30 in die Durchgangsbohrung 36 eingesetzt wird. Die Axialgleitelemente 30 werden von dem Zwischenraum 48 von innen in die Seitenwangen 24, 26 eingesetzt. In die vertikal oberen Durchgangsbohrung 36 der vertikal oberen Seitenwange 24 ist ein Halteelement 52 eingesetzt. Es kann vorgesehen sein, dass das Haltelement 52 in die Gewindebohrung 42 des Axialgleitelements 30 lösbar eingeschraubt ist, um das vertikal obere Axialgleitelement 30 in seiner Position zu halten. Es kann alternativ vorgesehen sein, dass das Halteelement einen Magneten aufweist, über den das Axialgleitelement 30 in der Durchgangsbohrung 36 gehalten werden kann. In der Figur 4c) ist der Verfahrensschritt dargestellt, in dem ein Planetenrad 18 zwischen die in den Seitenwangen 24, 26 einsitzenden Axialgleitelemente 30 eingeführt wird. In der Figur 4d) ist der Verfahrensschritt dargestellt, in dem eine Planetenachse 28 in die Seitenwangen 24, 26 und das Planetenrad 18 gesteckt wird. Das Halteelement 52 wird von dem Axialgleitelement 30 und aus der Durchgangsbohrung 36 entfernt.

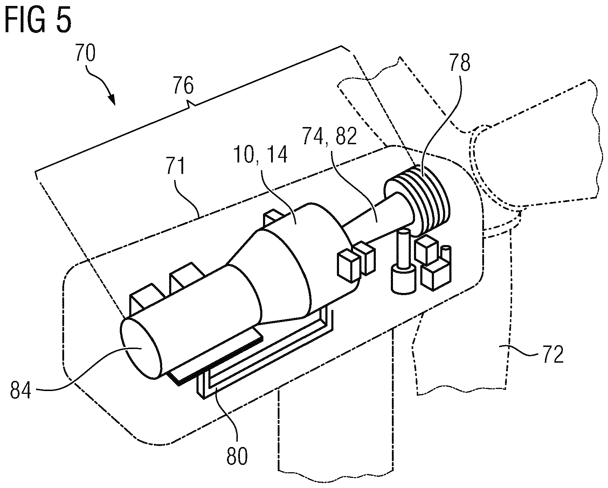

In der Figur 5 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 10 weist zumindest eine Planetenstufe 14 auf und ist wiederum über eine Hauptlagereinheit 82 mit einem Generator 84 gekoppelt. In der Hauptlagereinheit 82 ist eine Hauptwelle 74 vorgesehen ist.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Seitenwange
- 26: Seitenwange
- 28: Planetenachse
- 30: Axialgleitelement
- 32: Kragenabschnitt
- 34: Gleitfläche
- 36: Durchgangsbohrung
- 38: Schaftabschnitt
- 40: Stirnfläche
- 42: Gewindebohrung
- 44: Planetenachsen
- 46: Gleitlager
- 48: Zwischenraum
- 50: Grundkörper
- 52: Halteelement
- 70: Windkraftanlage
- 71: Gondel
- 72: Rotor
- 74: Hauptwelle
- 76: Antriebsstrang
- 78: Rotorflansch
- 80: Maschinenträger
- 82: Hauptlagereinheit
- 84: Generator

## Patentansprüche

1. Planetengetriebe (10) für eine über einen Rotor (72) angetriebene Windkraftanlage (70), mit
zumindest einer um eine Drehachse A_{D} umlaufenden Planetenstufe (14),
wobei die Planetenstufe (14) ein Sonnenrad (22), einen Planetenträger (16) und ein Hohlrad (20) aufweist und der Planetenträger (16) mehrere zwischen Seitenwangen (24, 26) des Planetenträgers (16) umlaufende und radial gleitgelagerte und wechselseitig mit dem Hohlrad (20) und dem Sonnenrad (22) in einem Verzahnungseingriff stehende Planetenrädern (18) aufnimmt und
wobei in jede Seitenwange (24, 26) zumindest ein Axialgleitelement (30) eingesetzt ist und ein Kragenabschnitt (32) eines jeden Axialgleitelements (30) in axialer Richtung über die Seitenwange (24, 26) hervorsteht und stirnseitig eine Gleitfläche (34) zur axialen Lagerung des Planetenrades (18) trägt,
**dadurch gekennzeichnet, dass**
der Kragenabschnitt (32) rückseitig an der jeweiligen Seitenwange (24, 26) zur unmittelbaren axialen Abstützung des Axialgleitelements (30) gegenüber dem Planetenträger (16) anliegt.

2. Planetengetriebe (10) nach Anspruch 1, **dadurch gekennzeichnet, dass** jede Seitenwange (24, 26) zumindest eine Bohrung (36) aufweist und die Axialgleitelemente (30) in die jeweilige Bohrung (36) eingesetzt sind.

3. Planetengetriebe (10) nach Anspruch 2, **dadurch gekennzeichnet, dass** ein Schaftabschnitt (38) des Axialgleitelements (30) einen Durchmesser aufweist, der einem Durchmesser der Bohrung (36) entspricht.

4. Planetengetriebe (10) nach Anspruch 3, **dadurch gekennzeichnet, dass** der Kragenabschnitt (32) einen zweiten, größeren Durchmesser als der Schaftabschnitt (38) aufweist.

5. Planetengetriebe (10) nach einem der Ansprüche 2 bis 4, **dadurch gekennzeichnet, dass** die Bohrung (36) als Durchgangsbohrung durch die jeweilige Seitenwange (24, 26) ausgebildet ist.

6. Planetengetriebe (10) nach einem der Ansprüche 1 bis 5, **dadurch gekennzeichnet, dass** die Gleitfläche (34) aus einem Bronzematerial oder einem Polymerverbundwerkstoff gebildet ist.

7. Planetengetriebe (10) nach einem der Ansprüche 1 bis 6, **dadurch gekennzeichnet, dass** das Axialgleitelement (30) aus einem Bronzematerial oder einem Polymerverbundwerkstoff gebildet ist.

8. Planetengetriebe (10) nach einem der Ansprüche 1 bis 7, **dadurch gekennzeichnet, dass** das Axialgleitelement (30) in der zu der Gleitfläche (34) axial entgegengesetzten Stirnfläche (40) eine Gewindebohrung (42) ausbildet.

9. Planetengetriebe (10) nach einem der Ansprüche 1 bis 8, **dadurch gekennzeichnet, dass** je Seitenwange (24, 26) eine der Anzahl der von dem Planetenträger (16) aufgenommenen Planetenrädern (18) entsprechende Anzahl an Axialgleitelementen (30) vorgesehen ist.

10. Antriebsstrang (76) für eine Windkraftanlage (70) zur drehmomentübertragenden Verbindung eines Rotors (72) mit einem Generator (84), umfassend eine Hauptlagereinheit (82) und einer Hauptwelle (74) und ein über die Hauptwelle (74) angetriebenes Getriebe (10),
**dadurch gekennzeichnet, dass** das Getriebe (10) als Planetengetriebe nach einem der vorangegangenen Ansprüche ausgebildet ist.

11. Windkraftanlage (70), umfassend einen Rotorflansch (78) mit einem Rotor (72) und einen Generator (84), wobei ein an einem Maschinenträger (80) gehaltener und den Rotorflansch (78) mit dem Generator (84) verbindender Antriebsstrang (76) vorgesehen ist, **dadurch gekennzeichnet, dass** der Antriebsstrang (76) nach Anspruch 10 ausgebildet ist.

12. Verfahren zur Montage von Planetenrädern (18) in einem Planetenträger (16), bei dem nach Bereitstellen eines vertikal gestellten Planetenträgers (16) zumindest ein Axialgleitelement (30) in jeweils eine jede Seitenwange (24, 26) des Planetenträgers (16) durchtretende Durchgangsbohrung (36) eingesetzt wird,
ein Halteelement (52) in die Durchgangsbohrung (36) der vertikal oberen Seitenwange (24, 26) eingesetzt und mit dem Axialgleitelement (30) verbunden wird, um das Axialgleitelement (30) in der Durchgangsbohrung (36) zu halten und
zumindest ein Planetenrad (18) zwischen die Axialgleitelemente (30) in den Seitenwangen (24, 26) eingeführt und eine Planetenachse (28) in die Seitenwangen (24, 26) und das Planetenrad (18) gesteckt wird und
das Halteelement (52) von dem Axialgleitelement (30) und aus der Durchgangsbohrung (36) entfernt wird.

13. Verfahren nach Anspruch 12, **dadurch gekennzeichnet, dass** das Halteelement als Gewindestift (52) ausgeführt mit dem Axialgleitelement (30) verschraubt wird, um das Axialgleitelement (30) in der Durchgangsbohrung (36) zu halten.

14. Verfahren nach Anspruch 12 oder 13, **dadurch gekennzeichnet, dass** in die vertikal oberen Seitenwange (24, 26) das Axialgleitelement (30) von vertikal unten und das Haltelement (52) von vertikal oben eingesetzt wird.
